(19) Europäisches Patentamt
European Patent Office
Office européen des brevets

(11) EP 2 119 675 A1

(12) **EUROPEAN PATENT APPLICATION**
published in accordance with Art. 153(4) EPC

(43) Date of publication:
**18.11.2009 Bulletin 2009/47**

(21) Application number: **08703593.7**

(22) Date of filing: **22.01.2008**

(51) Int Cl.:
***C02F 1/44*** *(2006.01)*
***B01D 61/04*** *(2006.01)*
***C02F 1/64*** *(2006.01)*

(86) International application number:
**PCT/JP2008/050743**

(87) International publication number:
**WO 2008/090854 (31.07.2008 Gazette 2008/31)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **24.01.2007 JP 2007014206**

(71) Applicant: **Kurita Water Industries Ltd.**
**Shinjuku-ku, Tokyo 160-8383 (JP)**

(72) Inventors:
- **KAWAKATSU, Takahiro**
  **Tokyo 160-8383 (JP)**
- **HIRANO, Akihide**
  **Tokyo 160-8383 (JP)**

(74) Representative: **Bertsch, Florian Oliver**
**Kraus & Weisert**
**Patent- und Rechtsanwälte**
**Thomas-Wimmer-Ring 15**
**80539 München (DE)**

# (54) METHOD FOR THE TREATMENT WITH REVERSE OSMOSIS MEMBRANE

(57) A method for treatment with a reverse osmosis membrane to reduce decrease in flux that occurs even under the conditions that water supplied to a reverse osmosis membrane treatment apparatus contains only a trace amount of iron and that the formation of scales of substances such as calcium and silica is prohibited. A method for performing a treatment with a reverse osmosis membrane to treat raw water containing iron at 1000 μg/L or less as total iron with a reverse osmosis membrane, including a step of adding a compound having a sulfo group to the raw water.

FIG. 1

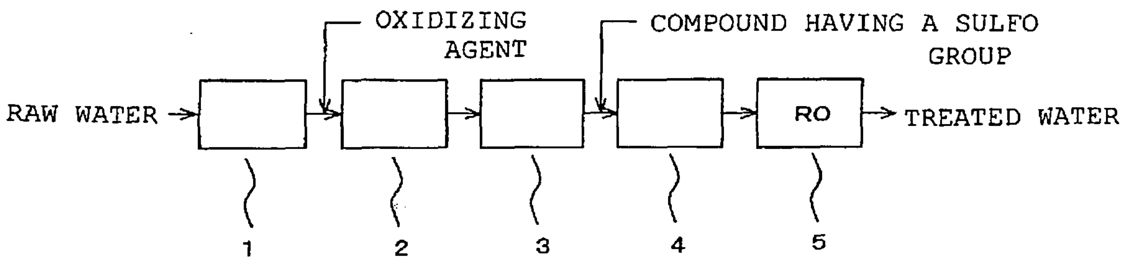


EP 2 119 675 A1

## Description

### Field of the Invention

The present invention relates to a treatment method using a reverse osmosis membrane and, in particular, relates to a method for treating raw water containing a trace amount of iron with a reverse osmosis membrane.

### Background of the Invention

Processes of collecting, regenerating, and reusing wastewater and processes of desalinizing sea water sometimes include treatments for improving water quality; such treatments involve the use of nanofiltration membranes or reverse osmosis membranes for removal of electrolytes and middle and small molecules (hereinafter, reverse osmosis membranes, including nanofiltration membranes, are simply referred to as "RO membranes" unless otherwise specified).

Clogging of RO membranes due to iron oxide adhering to the membranes when target raw water contains iron is known to occur in treatments using reverse osmosis membranes (hereinafter, simply referred to as "RO treatments"). As solutions to this problem, methods including addition of antiscalants or removal of iron followed by an RO treatment have been proposed (Patent Document 1 and Patent Document 2).

It has been considered that iron oxide adhering to an RO membrane is a significant problem only when water supplied to a reverse osmosis membrane apparatus (hereinafter, simply referred to as an "RO apparatus") contains iron at 1 mg/L or more. It has been also recognized that this problem is minor when water supplied to an RO apparatus contains iron at 1 mg/L or less as total iron with iron colloids removed. Furthermore, researchers have had the idea that decrease in an RO membrane's flux used in such a system is attributable to causes other than iron, for example, fouling due to organic matter, scale composed of nonferrous inorganic substances, and so forth.

Patent Document 3 describes an RO membrane treated using an ionic polymer for a higher rate of rejection of inorganic electrolytes and water-soluble organic matter. However, it is unknown how substances contained in water passing through such an RO membrane treated with a rejection rate improver are affected in an RO membrane apparatus having the RO membrane.

Patent Document 1: Japanese Unexamined Patent Application Publication No. H6-63549
Patent Document 2: Japanese Unexamined Patent Application Publication No. H7-155558
Patent Document 3: Japanese Unexamined Patent Application Publication No. 2006-110520

### Summary of the Invention

The present invention provides an RO treatment method for reducing decrease in flux under the condition that water supplied to an RO apparatus contains only a trace amount of iron.

A method for treatment with a reverse osmosis membrane according to the present invention is for treating raw water containing iron at 1000 μg/L or less as total iron with a reverse osmosis membrane, and includes a step of adding a compound having a sulfo group to the raw water.

The present invention allows for reducing decrease in an RO membrane's flux when water supplied to an RO apparatus contains iron only at 1 mg/L or less.

### Brief Description of the Drawings

Fig. 1 is a schematic diagram of an example water treatment apparatus used to implement the method according to the present invention.

### Detailed Description

The RO treatment method according to the present invention is used in an RO treatment of raw water containing iron, and the concentration of iron as total iron is 1000 μg/L or lower, preferably in the range of 10 to 1000 μg/L, more preferably in the range of 10 to 300 μg/L, and even more preferably in the range of 10 to 100 μg/L. The kind of raw water is not particularly limited as long as its total iron concentration falls within the ranges described above. Examples of the raw water include deferrized water, water not deferrized but containing only a trace amount of iron in the form of colloids and/or a solute, more specifically, deferrized industrial water, deferrized plant effluents, city water, and so forth.

The kind of deferrization is not particularly limited as long as it focuses on reducing the total iron concentration of raw water to the ranges described above; however, preferred examples thereof include a method in which an oxidant such as sodium hypochlorite or an oxygen-containing gas such as air is introduced into raw water so that iron ions dissolved in the water will be oxidized and converted into water-insoluble iron hydroxide, and then the insolubilized iron oxide is removed using filtration means. Examples of the filtration means include sand filters, ultrafilters, microfilters, small filters, and so forth.

To avoid clogging and fouling, the RO apparatus preferably has an active carbon tower, a coagulator, and a unit for pressurized floatation of coagulations. Since RO membranes are likely to be degraded by oxidation, the RO apparatus preferably further has a unit for removing oxidants (oxidation degradation inducers) contained in raw water as needed. Examples of such a unit for removing oxidation degradation inducers include an active carbon tower, an injector for reducing agents, and so forth. In particular, an active carbon tower can remove organic matter as well and thus can serve also as fouling prevention means. Fig. 1 shows a basic RO treatment system used in the RO treatment method according to the present invention. Note that producing ultrapure water using the RO treatment method according to the present invention necessitates that the RO apparatus 5 shown in Fig. 1 have downstream apparatuses including decarboxylation means, an ion exchange apparatus, an electric-regeneration deionization apparatus, a UV oxidation apparatus, a mixed resin apparatus, and an ultrafilter.

In the RO treatment method according to the present invention, a compound having a sulfo group is added to raw water for RO treatment. Preferred examples of the compound having a sulfo group include water-soluble polymers having sulfo groups. Examples of monomers containing a sulfo group ($-SO_3H$) that can constitute such water-soluble polymers include conjugated diene sulfonic acids such as 2-methyl-1,3-butadiene-1-sulfonic acid, unsaturated (meth) allylether monomers having a sulfo group such as 3-allyloxy-2-hydroxypropane sulfonic acid and 3-methallyloxy-2-hydroxypropane sulfonic acid, (meth)acrylamide-2-methylpropane sulfonic acid, 2-hydroxy-3-acrylamidepropane sulfonic acid, styrene sulfonic acid, methallyl sulfonic acid, vinyl sulfonic acid, allyl sulfonic acid, and isoamylene sulfonic acid as well as their salts. Examples of the water-soluble polymers include homopolymers of these sulfo-group-containing monomers and their copolymers with monomers having no sulfo groups. Examples of the monomers having no sulfo groups include nonionic monomers such as isobutylene, amylene, acrylamide, and N-vinyl formaldehyde and carboxyl-group-containing monomers such as acrylic acid, methacrylic acid, crotonic acid, isocronotic acid, vinyl acetic acid, atropic acid, maleic acid, fumaric acid, itaconic acid, and hydroxyethylacrylic acid as well as their salts.

Examples of particularly preferred sulfo-group-containing compounds include:

polystyrene sulfonic acid as a homopolymer of styrene sulfonic acid;
a copolymer containing acrylamide-2-methylpropane sulfonic acid (AMPS) and acrylic acid (AA) in a ratio of 10 to 30, 70 to 99 mol%;
a copolymer containing AMPS, AA, and N-vinylformamide in a ratio of 5 to 30, 40 to 90, 5 to 30 mol%;
a copolymer containing 3-allyloxy-2-hydroxypropane sulfonic acid (HAPS) and AA in a ratio of 10 to 30, 70 to 99 mol%; and
a copolymer containing HAPS, AA, and
hydroxyethylacrylic acid in a ratio of 10 to 30, 55 to 85, 5 to 15 mol%.

Addition of a compound having a sulfo group to water supplied to an RO apparatus reduces decrease in an RO membrane's flux. Details regarding the mechanism by which this can occur are unclear; however, this is probably because once a compound having a sulfo group is added to water supplied to an RO apparatus, iron contained in water supplied to the RO apparatus and the compound having a sulfo group bind to each other, reducing adhesion of iron to the RO membrane.

The weight average molecular weight of the water-soluble polymer having sulfo groups is preferably in the range of 1,000 to 1,000,000 and more preferably in the range of 10,00 to 100,000. A weight average molecular weight of the water-soluble polymer of less than 1,000 would result in an insufficient effect of preventing adhesion of iron to the RO membrane. However, a weight average molecular weight of the water-soluble polymer of more than 1,000,000 would make the resultant aqueous solution have too high a viscosity, resulting in decreased ease in handling or adhesion of the water-soluble polymer itself to the RO membrane leading to decrease in flux.

The sulfo-group-containing compound is added to water supplied to the RO apparatus preferably at a concentration on the order of 0.1 to 100 mg/L, in particular, on the order of 1 to 10 mg/L.

In the method according to the present invention, the water system may further contain an inorganic polyphosphoric acid compound such as sodium hexametaphosphorate and sodium tripolyphosphorate, a phosphonic acid such as hydoxyethylidene diphosphonic acid and phosphonobutane tricarboxylic acid, or an antiscalant or a slime control agent commonly used in RO treatment besides the sulfo-group-containing compound. Examples of preferred slime control agents include ones protecting RO membranes from oxidation decomposition, for example, combined chlorine agents composed of chlorine and ammonia, sulfamic acid, or some other compound bound to the chlorine, isothiazolone

compounds, and bromine-containing slime control agents such as dibromonitropropionate amide.

The place for adding the sulfo-group-containing compound and the agents described above to water supplied to the RO apparatus is not particularly limited; however, it is usually installed as a downstream unit of pretreatment units such as the filter 2 and the active carbon tower 3. The agents described above excluding the slime control agent are preferably added in a consistent manner. On the other hand, the slime control agent may be added in a consistent manner or in an intermittent manner.

The method according to the present invention is suitable especially for water supplied to the RO apparatus having a pH of 6 or higher, in particular, 7 or higher. When the pH of the water is 6 or higher, in particular, 7 or higher, the absence of the sulfo-group-containing compound causes iron to have a greater effect on the water, resulting in a significant decrease in flux.

The RO apparatus used in the method according to the present invention is configured preferably with an RO membrane module having a vessel on which an RO membrane element having an RO membrane is mounted. This RO membrane used in the RO apparatus is a liquid separation membrane that rejects solute and allows solvent to permeate when a pressure equal to or higher than the osmotic pressure between the solutions existing across the membrane is applied to the high-concentration side. Examples of the membrane structure of the RO membrane include polymer membranes such as composite membranes and phase separation membranes. Examples of the material of the RO membrane include polyamide materials such as aromatic polyamides, aliphatic polyamides, and composite materials made of polyamide materials.

No particular limitation is imposed on the form of the RO membrane module. Applicable forms include, for example, a tubular membrane module, a flat membrane module, a spiral membrane module, and a hollow fiber membrane module.

When an RO membrane is treated with a rejection rate improver, the rate of rejection of water-insoluble organic matter and inorganic electrolytes can be improved.

Examples of the rejection rate improver include water-soluble polymers such as polyvinyl methyl ether, polyvinyl alcohols, and polyethyleneimine, polyphenols such as tannic acid, the ionic polymers having a weight average molecular weight of 100,000 described in Patent Document 3 (e.g., polyamidine, polyvinyl amidine, and polystyrene sulfonic acid), and compounds having a polyethylene glycol chain with a weight average molecular weight in the range of 2000 to 6000. The method according to the present invention is suitable especially when an anionic compound is used as the rejection rate improver. This is because an RO membrane treated with an anionic rejection rate improver becomes more susceptible to the effect of iron.

Preferred examples of rejection rate improvers made of an anionic compound include anionic water-soluble polymers and tannic acid. Examples of anionic water-soluble polymers include carboxyl-group-containing polymers such as polyacrylic acid and polymethacrylic acid and sulfonate-group-containing polymers such as polystyrene sulfonic acid, dextran sulfate, and polyvinyl sulfonic acid.

Compounds having a polyalkylene glycol chain with an introduced anionic group can also be suitably used as the rejection rate improver.

Examples of anion groups introduced into polyalkylene glycol chains include the sulfo group $-SO_3H$, carboxyl group $-COOH$, amino group $-NH_2$, and quaternary ammonium group - $N^+R_3X^-$.

The method for introducing sulfo groups into polyalkylene glycol chains is, for example, one in which epoxypropanol and sodium sulfite are added to an aqueous solution of polyethylene glycol, and then these components are allowed to react at 70 to 90°C under reflux so that sulfonated polyethylene glycol expressed by Formula [1] or Formula [2] will be synthesized.

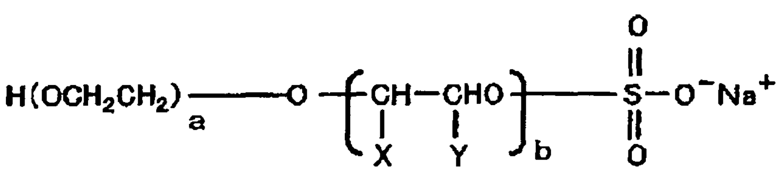

…[1]

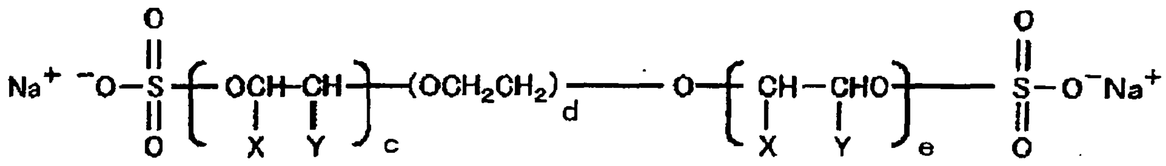

···[2]

In Formula [1], a is preferably in the range of 50 to 150, and b is preferably in the range of 1 to 100.
In Formula [2], c is preferably in the range of 1 to 100, d is preferably in the range of 50 to 150, and e is in the range of 1 to 100.
In Formulae [1] and [2], (X, Y) is (H, $CH_2OH$) or ($CH_2OH$, H).
Sulfonated polyethylene glycol is not limited to the compound expressed by Formula [1] or Formula [2]; it may be the compound expressed by Formula [3], that expressed by Formula [4], or the like.

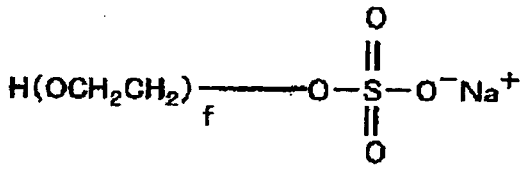

···[3]

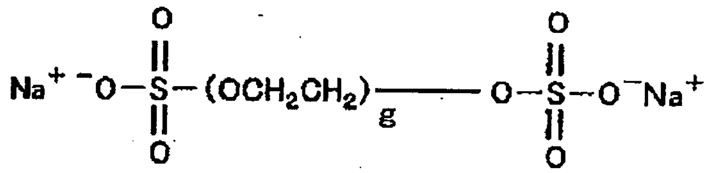

···[4]

In Formula [3], f is preferably in the range of 50 to 150. In Formula [4], g is preferably in the range of 50 to 150.

The use of any of such compounds as the main ingredient of the rejection rate improver not only leads to an improved rejection rate of an RO membrane but also allows for effective removal of small ionic organic molecules as well as boron and silica, which are difficult to remove with a known RO membrane.

Although a treatment for improving the rejection rate may be completed by immersing an RO membrane module in an aqueous solution containing a rejection rate improver, it is preferably completed by flushing the primary side of the RO membrane module. The time for each attempt to pass an aqueous solution containing a rejection rate improver is preferably in the range of 2 to 24 hours. The higher the concentration of the rejection rate improver in the aqueous solution is, the shorter the flushing time can be; however, high concentrations of the rejection rate improver possibly result in a markedly decreased permeation flux. Although the permeated water discharge valve of the RO membrane module may be closed while this aqueous solution containing a rejection rate improver is flowing through the module, simultaneous discharge of permeated water and treatment would allow the rejection rate improver to be adsorbed onto the RO membrane efficiently and uniformly and also lead to efficient treatment with continuous operation of the apparatus.

In this case, it is preferable that the operation pressure used in supplying the aqueous solution containing a rejection rate improver to the primary side of the RO membrane module is 0.3 MPa or higher and that the ratio of [water permeate flow]/[supply of the aqueous solution containing a rejection rate improver] is 0.2 or higher. This allows the rejection rate improver to come into contact with the surface of the RO membrane effectively, thereby making the rejection rate improver be adsorbed onto the RO membrane efficiently and uniformly.

Note that the weight average molecular weight of the sulfo-group-containing water-soluble polymer and the rejection rate improver added in accordance with the present invention is determined by analyzing the aqueous solutions of these compounds by gel permeation chromatography and then calculating the molecular weights of them from the

obtained chromatogram as the polyethylene oxide standard equivalents. The weight average molecular weight of compounds having too large a molecular weight, for which no polyethylene oxide standard is available, can be determined by light scattering, ultracentrifugation, or some other analytical method. Examples

Hereinafter, the present invention is described in more detail with reference to examples and comparative examples thereof.

Note that, in the following examples, the rates of rejection of ionic substances were calculated using the following formula based on measurements of electric conductivity.

Rejection rate = 1 - (electric conductivity of permeated fluid × 2) / (electric conductivity of supplied fluid + electric conductivity of concentrate)

[Comparative Example 1]

Water having the composition shown in Table 1 was used as the raw water; the raw water was subjected to an RO treatment with an RO apparatus having a benchtop-test-oriented pressure-proof cell for small flat membranes under the conditions that the operation pressure was 0.75 MPa and the recovery rate was 30%. The RO membrane used with this RO apparatus was an ultralow-pressure aromatic polyamide RO membrane "ES-20" manufactured by Nitto Denko Corporation.

The measured flux (25°C; 0.75 MPa) and rejection rate of the RO apparatus are shown in Table 2.

[Table 1]

| Component | Concentration[mg/L] |
|---|---|
| Na | 216 |
| Cl | 303 |
| IC | 10 |
| Total Fe | 0.01 |
| pH | 6.0 |

[Example 1]

An RO treatment was conducted under the same conditions as in Comparative Example 1, except that a copolymer containing AMPS and AA in a ratio of 20:80 mol% (hereinafter, referred to as "Polymer 1") was added to the raw water so as to have a concentration of 3 mg/L. The measured flux (25°C; 0.75 MPa) and rejection rate of the RO apparatus are shown in Table 2.

As shown in Table 2, Comparative Example 1 not containing Polymer 1, a sulfo-group-containing compound, showed a time-dependent decrease in flux despite that the conditions prohibited the formation of scales of substances such as calcium, silica, and magnesium. However, as seen in the results for Example 1, the addition of the sulfo-group-containing compound Polymer 1 reduced this decrease in flux.

[Comparative Example 2]

The RO membrane used was an ultralow-pressure aromatic polyamide RO membrane "ES-20" manufactured by Nitto Denko Corporation; it was subjected to the following treatment for improving the rejection rate: an aqueous solution containing polyvinyl amidine having a molecular weight of 3,000,000 at a concentration of 1 mg/L was allowed to pass through the RO membrane at an operation pressure of 0.75 MPa and a recovery rate of 50% for 5 hours, and then an aqueous solution containing sodium polystyrene sulfonate having a molecular weight of 1,000,000 at a concentration of 1 mg/L was allowed to pass through the RO membrane at an operation pressure of 0.75% and a recovery rate

of 50% for 5 hours. The other conditions for the RO treatment were the same as in Comparative Example 1. The measured flux (25°C; 0.75 MPa) and rejection rate of the RO apparatus are shown in Table 2.

[Example 2]

An RO treatment was conducted under the same conditions as in Comparative Example 2, except that Polymer 1 was added to the raw water so as to have a concentration of 3 mg/L. The measured flux (25°C; 0.75 MPa) and rejection rate of the RO apparatus are shown in Table 2.

[Comparative Example 3]

The RO membrane used was an ultralow-pressure aromatic polyamide RO membrane "ES-20" manufactured by Nitto Denko Corporation; it was subjected to the following treatment for improving the rejection rate: an aqueous solution containing polyvinyl amidine having a molecular weight of 3,000,000 at a concentration of 1 mg/L was allowed to pass through the RO membrane at an operation pressure of 0.75 MPa and a recovery rate of 50% for 20 hours, and then an aqueous solution containing the polymer named Compound 2, which was polyethylene glycol having a molecular weight of 4000 and attached sulfonate groups, at a concentration of 0.1 mg/L was allowed to pass through the RO membrane at an operation pressure of 0.75% and a recovery rate of 50% for 20 hours. The other conditions for the RO treatment were the same as in Comparative Example 1. The measured flux (25°C; 0.75 MPa) and rejection rate of the RO apparatus are shown in Table 2.

[Example 3]

An RO treatment was conducted under the same conditions as in Comparative Example 3, except that polystyrene sulfonic acid (hereinafter, referred to as "Polymer 2") was added to the raw water so as to have a concentration of 3 mg/L. The measured flux (25°C; 0.75 MPa) and rejection rate of the RO apparatus are shown in Table 2.

[Example 4]

An RO treatment was conducted under the same conditions as in Example 3, except that Kuriverter EC503 (an isothiazolone slime control agent) manufactured by Kurita Water Industries Ltd. was added to the raw water so as to have a concentration of 1 mg/L. The measured flux (25°C; 0.75 MPa) and rejection rate of the RO apparatus are shown in Table 2.

[Comparative Example 4]

The RO membrane used was an ultralow-pressure aromatic polyamide RO membrane "ES-20" manufactured by Nitto Denko Corporation; it was subjected to the following treatment for improving the rejection rate: an aqueous solution containing tannic acid having a molecular weight of 1000 at a concentration of 100 mg/L was allowed to pass through the RO membrane at an operation pressure of 0.75 MPa and a recovery rate of 50% for 1 hour. The other conditions for the RO treatment were the same as in Comparative Example 1. The measured flux (25°C; 0.75 MPa) and rejection rate of the RO apparatus are shown in Table 2.

[Example 5]

A copolymer containing HAPS and AA in a ratio of 20:80 mol% (hereinafter, referred to as "Polymer 3") was added to the raw water so as to have a concentration of 3 mg/L. The other conditions for the RO treatment were the same as in Comparative Example 4. The measured flux (25°C; 0.75 MPa) and rejection rate of the RO apparatus are shown in Table 2.

[Example 6]

An RO treatment was conducted under the same conditions as in Example 5, except that Kuriverter EC503 was added to the raw water so as to have a concentration of 1 mg/L. The measured flux (25°C; 0.75 MPa) and rejection rate of the RO apparatus are shown in Table 2.

[Table 2]

| | Permeation flux | | | Rejection rate | | |
|---|---|---|---|---|---|---|
| | [m3/(m2 · d)] | | | [-] | | |
| | 2hours | 100hours | 750hours | 2hours | 100hours | 750hours |
| Comparative Example 1 | 0.79 | 0.73 | 0.68 | 0.981 | 0.979 | 0.977 |
| Example 1 | 0.79 | 0.80 | 0.79 | 0.984 | 0.987 | 0.987 |
| Comparative Example 2 | 0.62 | 0.61 | 0.59 | 0.992 | 0.983 | 0.971 |
| Example 2 | 0.60 | 0.59 | 0.58 | 0.991 | 0.989 | 0.989 |
| Comparative Example 3 | 0.52 | 0.50 | 0.49 | 0.990 | 0.980 | 0.968 |
| Example 3 | 0.53 | 0.51 | 0.49 | 0.990 | 0.988 | 0.987 |
| Example 4 | 0.53 | 0.53 | 0.53 | 0.990 | 0.990 | 0.989 |
| Comparative Example 4 | 0.63 | 0.60 | 0.55 | 0.989 | 0.982 | 0.978 |
| Example 5 | 0.63 | 0.60 | 0.56 | 0.988 | 0.987 | 0.985 |
| Example 6 | 0.63 | 0.63 | 0.62 | 0.989 | 0.989 | 0.988 |

As shown in Table 2, Comparative Examples 1 to 4 containing none of Polymer 1, Polymer 2, and Polymer 3, sulfo-group-containing compounds, showed a time-dependent decrease in flux despite that the conditions prohibited the formation of scales of substances such as calcium, silica, and magnesium. However, as seen in the results for Examples 1 to 6, the addition of any of the sulfo-group-containing compound reduced these decreases in flux. Among Comparative Examples 1 to 4 containing no sulfo-group-containing compound, the RO membranes treated with an anionic rejection rate improver (Comparative Examples 2 to 4) tended to experience a more significant decrease in flux; however, these time-dependent decreases in flux were reduced by the addition of any of the sulfo-group-containing compounds. Note that Example 4 and Example 6 experienced a further reduced decrease in flux thanks to the addition of the slime control agent. The decreases in flux observed in Comparative Examples 3 and 4 and Examples 3 and 5 are probably due to the use of tannic acid, which is more biodegradable than others, as the rejection rate improver; these rejection rate improvers may have been assimilated, thereby promoting the growth of microorganisms. On the other hand, those observed in Examples 4 and 6 were milder probably because of the addition of the slime control agent.

[Comparative Example 5]

An RO treatment was conducted under the same conditions as in Comparative Example 1, except that the raw water was water having the composition shown in Table 3 and that hexametaphosphoric acid was added as an antiscale against calcium scales to the raw water so as to have a concentration of 4 mg/L. The measured flux (25°C; 0.75 MPa) and rejection rate of the RO apparatus are shown in Table 4.

[Table 3]

| Component | Concentration [mg/L] |
|---|---|
| Ca | 20 |
| Na | 235 |
| Cl | 339 |
| IC | 20 |
| Total Fe | 0.05 |
| pH | 6.0 |

[Example 7]

An RO treatment was conducted under the same conditions as in Comparative Example 5, except that Polymer 1 was added to the raw water so as to have a concentration of 4 mg/L. The measured flux (25°C; 0.75 MPa) and rejection rate of the RO apparatus are shown in Table 4.

[Table 4]

| | Permeation flux [m3/(m2 · d)] | | | Rejection rate [-] | | |
|---|---|---|---|---|---|---|
| | 2hours | 100hours | 750hours | 2hours | 100hours | 750hours |
| Comparative Example 5 | 0.73 | 0.69 | 0.63 | 0.984 | 0.982 | 0.980 |
| Example 7 | 0.73 | 0.72 | 0.72 | 0.984 | 0.985 | 0.984 |

As shown in Table 4, Comparative Example 5 not containing the sulfo-group-containing Polymer 1 showed a time-dependent decrease in flux despite that it contained an antiscale against calcium scales, hexametaphosphoric acid, for preventing calcium scales from occurring. However, as seen in the results for Example 7, the addition of the sulfo-group-containing compound reduced this decrease in flux.

Although the present invention has been described in detail with reference to specific embodiments, it is apparent to those skilled in the art that a variety of modifications can be made without departing from the spirit and scope of the present invention.

The present application is based on Japanese Patent Application filed on January 24, 2007 (Japanese Patent Application No. 2007-14206), which is hereby incorporated by citation in its entirety.

## Claims

1. A method for treatment with a reverse osmosis membrane to treat raw water containing iron at 1000 μg/L or less as total iron with a reverse osmosis membrane, comprising a step of adding a compound having a sulfo group to the raw water.

2. The method for treatment with a reverse osmosis membrane according to Claim 1, wherein the reverse osmosis membrane is treated with a rejection rate improver.

3. The method for treatment with a reverse osmosis membrane according to Claim 1, wherein the treatment with the reverse osmosis membrane is carried out under the condition that the pH of the raw water is 6 or higher.

4. The method for treatment with a reverse osmosis membrane according to Claim 1, wherein the raw water contains iron at 10 to 1000 μg/L as total iron.

5. The method for treatment with a reverse osmosis membrane according to Claim 1, wherein the raw water contains iron at 10 to 300 μg/L as total iron.

6. The method for treatment with a reverse osmosis membrane according to Claim 1, wherein the raw water contains iron at 10 to 100 μg/L as total iron.

7. The method for treatment with a reverse osmosis membrane according to Claim 1, wherein the raw water is subjected to a pretreatment, and then the compound having a sulfo group is added to the raw water.

8. The method for treatment with a reverse osmosis membrane according to Claim 7, wherein the pretreatment includes at least a treatment with active carbon.

9. The method for treatment with a reverse osmosis membrane according to Claim 1, wherein the compound having a sulfo group is a water-soluble polymer having a sulfo group.

**10.** The method for treatment with a reverse osmosis membrane according to Claim 9, wherein the compound having a sulfo group is a polymer made of a monomer having a sulfo group.

**11.** The method for treatment with a reverse osmosis membrane according to Claim 9, wherein the compound having a sulfo group is a copolymer composed of a monomer having a sulfo group and a monomer having no sulfo group.

**12.** The method for treatment with a reverse osmosis membrane according to Claim 10 or 11, wherein the monomer having a sulfo group is at least one selected from the group consisting of an unsaturated (meth)allylether monomer having a sulfo group, (meth)acrylamide-2-methylpropane sulfonic acid, 2-hydroxy-3-acrylamidepropane sulfonic acid, styrene sulfonic acid, methallyl sulfonic acid, vinyl sulfonic acid, allyl sulfonic acid, isoamylene sulfonic acid, and their salts.

**13.** The method for treatment with a reverse osmosis membrane according to Claim 11, wherein the monomer having no sulfo group is at least one selected from the group consisting of isobutylene, amylene, acrylamide, and N-vinyl formaldehyde, acrylic acid, methacrylic acid, crotonic acid, isocronotic acid, vinyl acetic acid, atropic acid, maleic acid, fumaric acid, itaconic acid, hydroxyethylacrylic acid, and their salts.

**14.** The method for treatment with a reverse osmosis membrane according to Claim 11, wherein the compound having a sulfo group is at least one selected from the group consisting of polystyrene sulfonic acid as a homopolymer of styrene sulfonic acid, a copolymer containing acrylamide-2-methylpropane sulfonic acid (AMPS) and acrylic acid (AA) in a ratio of 10 to 30, 70 to 99 mol%, a copolymer containing AMPS, AA, and N-vinylformamide in a ratio of 5 to 30, 40 to 90, 5 to 30 mol%, a copolymer containing 3-allyloxy-2-hydroxypropane sulfonic acid (HAPS) and AA in a ratio of 10 to 30, 70 to 99 mol%, and a copolymer containing HAPS, AA, and hydroxyethylacrylic acid in a ratio of 10 to 30, 55 to 85, 5 to 15 mol%.

**15.** The method for treatment with a reverse osmosis membrane according to Claim 9, wherein the weight average molecular weight of the water-soluble polymer having a sulfo group is in the range of 1,000 to 1,000,000.

**16.** The method for treatment with a reverse osmosis membrane according to Claim 1, wherein the compound having a sulfo group is added to the raw water so as to have a concentration in the range of 0.1 to 100 mg/L.

**17.** The method for treatment with a reverse osmosis membrane according to Claim 1, wherein at least one selected from the group consisting of an inorganic polyphosphoric acid, a phosphonic acid, an antiscalant, and a slime control agent is added to the raw water.

**18.** The method for treatment with a reverse osmosis membrane according to Claim 2, wherein the rejection rate improver is at least one selected from the group consisting of polyvinyl methyl ether, a polyvinyl alcohol, polyethyleneimine, tannic acid, polyamidine, polyvinyl amidine, polystyrene sulfonic acid, and a compound having a polyethylene glycol chain, said polyethylene glycol chain having a weight average molecular weight in the range of 2000 to 6000.

FIG. 1

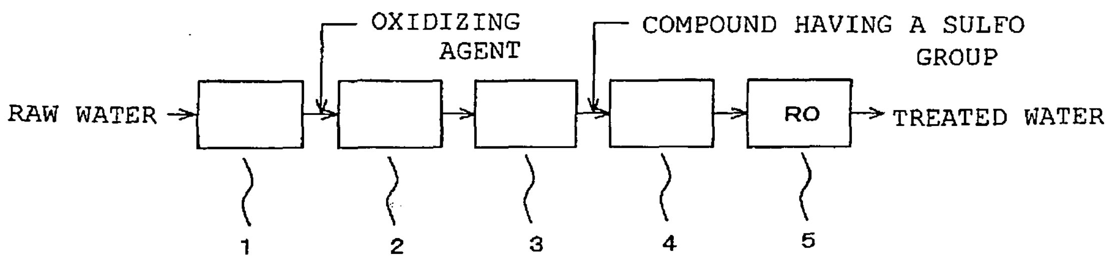
OXIDIZING AGENT
COMPOUND HAVING A SULFO GROUP
RAW WATER
RO
TREATED WATER
1
2
3
4
5

## INTERNATIONAL SEARCH REPORT

International application No. PCT/JP2008/050743

A. CLASSIFICATION OF SUBJECT MATTER
*C02F1/44*(2006.01)i, *B01D61/04*(2006.01)i, *C02F1/64*(2006.01)i

According to International Patent Classification (IPC) or to both national classification and IPC

B. FIELDS SEARCHED

Minimum documentation searched (classification system followed by classification symbols)
C02F1/44, B01D61/04, C02F1/64

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 8-108048 A (Toray Industries, Inc.), 30 April, 1996 (30.04.96), Claims 9, 15, 24; Par. Nos. [0021], [0037], [0038]<br>& US 6187200 B1 & EP 709130 A1<br>& EP 1161981 A2 & DE 69527021 D<br>& DE 69527021 T & AU 3315295 A<br>& CN 1132108 A & CA 2160330 A<br>& KR 204608 B & AT 218917 T<br>& ES 2178660 T & PT 709130 T<br>& CA 2160330 A1 | 1,3,7-10,12, 14,16,17<br>2,17,18<br>4-6,11,13, 15,18 |
| X<br>Y<br>A | JP 2001-224933 A (Hakuto Co., Ltd.), 21 August, 2001 (21.08.01), Claims 1 to 3; Par. Nos. [0011] to [0020] (Family: none) | 1,3-5,7-9, 11-17<br>2,17,18<br>6,10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>15 February, 2008 (15.02.08) | Date of mailing of the international search report<br>26 February, 2008 (26.02.08) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2008/050743

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-110520 A (Kurita Water Industries Ltd.), 27 April, 2006 (27.04.06), Claims 2, 5, 8, 10; Par. No. [0009] & WO 2006/043684 A1 & EP 1808221 A1 | 2,18 |
| Y | JP 2006-95425 A (Kurita Water Industries Ltd.), 13 April, 2006 (13.04.06), Par. No. [0047] (Family: none) | 17 |

Form PCT/ISA/210 (continuation of second sheet) (April 2007)

INTERNATIONAL SEARCH REPORT

International application No.
PCT/JP2008/050743

Claim 1 includes methods for the treatment with a reverse osmosis membrane which comprise adding any "sulfo-bearing compound" to raw water, but only compounds set forth in claims 9-14 are disclosed within the meaning of PCT Article 5. Thus, claim 1 is not supported within the meaning of PCT Article 6.

Consequently, search has been made on the basis of the finding that the "sulfo-bearing compound" is restricted to compounds supported by the description and disclosed therein, namely, those specified in claims 9-14.

Claim 2 relates to a method for the treatment with a reverse osmosis membrane treated with a "rejection rate improver". However, what particular substances the "rejection rate improver" includes is unclear. Further, only compounds set forth in claim 18 are disclosed within the meaning of PCT Article 5, so that claim 2 is not supported within the meaning of PCT Article 6.

Consequently, search has been made on the basis of the finding that the "rejection rate improver" is restricted to compounds supported by the description and disclosed therein, namely, those specified in claim 18.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H663549 B
- JP H7155558 B
- JP 2006110520 A
- JP 2007014206 A